# EUROPÄISCHE PATENTSCHRIFT

(11) **EP 0 775 609 B1**
(45) Veröffentlichungstag und Bekanntmachung des Hinweises auf die Patenterteilung: **04.08.1999**
(21) Anmeldenummer: 96115761.7
(22) Anmeldetag: 02.10.1996
(51) Int. Cl.: B60R 11/02, H04M 1/04

(54) **Halterung zum Einbau in Fahrzeuge**
Holding device for mounting in a vehicle
Support à monter dans un véhicule

(30) Priorität: 16.11.1995 DE 19542720
(43) Veröffentlichungstag der Anmeldung: 28.05.1997
(73) Patentinhaber: Herbert Richter Metallwaren-Apparatebau GmbH & Co., 75180 Pforzheim (DE)
(72) Erfinder: Richter, Herbert, 75331 Engelsbrand (DE)
(74) Vertreter: Trappenberg, Hans

(56) Entgegenhaltungen:
- EP-A- 0 475 091
- DE-U- 9 216 190
- US-A- 5 113 436
- US-A- 5 305 381

## Beschreibung

Die Erfindung betrifft eine Halterung zum Einbau in Fahrzeuge, insbesondere Kraftfahrzeuge, zur vorübergehenden Aufnahme von frei beweglichen Teilen, insbesondere Mobilfunktelefonen, mit einem Grundkörper, an dem zwei Klemmbacken befestigt sind, von denen wenigstens eine erste gegen eine Federkraft verschiebbar und in unterschiedlichen Positionen arretierbar ist, und einem Auslöser, mit dem die Arretierung aufhebbar ist, wobei der Auslöser eine Rastnase aufweist, welche in ein verzahntes Element eingreift, und der Eingriff durch Verschiebung des Auslösers aufhebbar ist.

Derartige Halterungen erfreuen sich in jüngster Zeit zunehmender Beliebtheit. Nachdem zunächst Halterungen bekannt wurden, welche seitliche Klemmbacken aufweisen, welche durch Federkraft zusammengezogen wurden, wodurch der aufzunehmende Gegenstand klemmend in der Halterung gehalten wurde (vgl. EP 0 475 091 A2), sind nun Halterungen bekannt geworden, bei denen die Klemmbacken gegen eine Federkraft zusammenschiebbar und in unterschiedlichen Positionen arretierbar sind. Dies hat den Vorteil, daß bei leerer Halterung die Klemmbacken am weitesten auseinander sind, wodurch ein vom Halter aufzunehmender Gegenstand auf einfache Weise in die Halterung verbracht werden kann und danach die Klemmbacken soweit zusammengedrückt werden können, bis sie den Gegenstand klemmend umschließen, wobei sie in der klemmmenden Position arretiert werden.

Aus der DE 92 16 190.1 U1 ist eine Halterung für ein Mobiltelefon bekannt, welche ein Sitzteil hat, welches gegen eine Federkraft zueinander verschiebbar geführte Klemmbacken aufweist. Die Klemmbacken sind mit Zahnschienen versehen, welche zueinander parallel in Bewegungsrichtung der Klemmbacken verlaufend angeordnet sind. Die Zahnschienen kämmen mit einem zwischen ihnen auf einem Sitzteil drehbar gelagerten Klemmenzahnrad, welches mit einem Gesperrezahnrad verkeilt ist. Das Sitzteil weist weiterhin einen von außen gegen eine Federkraft betätigbaren Schieber zur Freigabe der Klemmbacken auf. Der Schieber hat eine Klaue, welche bei nicht betätigtem Schieber mit dem Gesperrezahnrad in Eingriff steht und eine Drehung des Gesperrezahnrads nur in die Richtung erlaubt, die der Richtung entspricht, in die die Klemmbacken aufeinander zu bewegt werden. Bei betätigtem Schieber ist der Eingriff der Klaue in das Gesperrezahnrad gelöst, wodurch das Gesperrezahnrad in die andere Richtung bewegt werden kann, welche der Richtung entspricht, in die die Klemmbacken durch die Federkraft voneinander wegbewegt werden.

Wenngleich durch den bekannten Aufbau der Halterung auch erreicht wird, daß die Klemmbacken in unterschiedlichen Positionen arretierbar sind, so ist der Aufbau doch recht aufwendig. Die Ausbildung der Zahnschienen an den Klemmbacken ist kompliziert und daher in der Herstellung teuer. Darüber hinaus ergeben sich beim Montieren der Anordnung Probleme dadurch, daß die Zahnschienen mit dem Klemmenzahnrad in Eingriff gebracht werden müssen. Ebenso würde der Verlust eines Zahnes entweder der Zahnschienen oder des Klemmenzahnrads die Funktion der Halterung stark beeinträchtigen.

Es ist Aufgabe der Erfindung, eine eingangs genannte Halterung derart auszubilden, daß sie einfach herstellbar ist und zuverlässig funktioniert.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung ist bei einer eingangs genannten Halterung ein um eine Achse drehbares Element vorgesehen, welches in einem Abstand zur Achse wenigstens einen ersten Mitnehmer aufweist, und die erste verschiebbare Klemmbacke wenigstens ein mit dem ersten Mitnehmer in Eingriff bringbares erstes Element aufweist, wobei das drehbare Element mit dem verzahnten Element in Wirkverbindung steht.

Durch den ersten Mitnehmer, welcher mit dem ersten Element in Eingriff steht, wird auf einfache Weise erreicht, daß die lineare Bewegung der Klemmbacke als Rotationsbewegung auf das drehbare Element übertragen wird. Die Drehbewegung des drehbaren Elements überträgt sich durch die Wirkverbindung auf das verzahnte Element. Durch die Verschiebung der Klemmbacke wird somit eine Drehbewegung des verzahnten Elements bewirkt. Greift die Rastnase des Auslösers in das verzahnte Element ein, wird verhindert, daß die Klemmbacke sich in Richtung der Federkraft bewegt. Die Rastnase des Auslösers ist daher so ausgebildet, daß sie im Eingriff mit dem verzahnten Element eine Bewegung des verzahnten Elements in die Richtung, die der Richtung der Klemmbacke gegen die Federkraft entspricht, drehbar ist, eine Drehung in die andere Richtung hingegen unterbindet. Zur Ermöglichung einer Drehung in die Richtung, die der Richtung der Klemmbacke in Richtung der Federkraft entspricht, muß der Auslöser derart betätigt werden, daß der Eingriff der Rastnase in das verzahnte Element aufgehoben wird.

In vorteilhafter Weise kann die Halterung so ausgebildet sein, daß auch die zweite Klemmbacke gegen eine Federkraft verschiebbar und in unterschiedlichen Positionen arretierbar ist. Das drehbare Element kann hierzu einen zweiten Mitnehmer aufweisen, welcher in ein mit dem zweiten Mitnehmer in Eingriff bringbares zweites Element in Eingriff steht, welches an der zweiten Klemmbacke angeordnet ist. Die Übertragung der Linearbewegung der zweiten Klemmbacke auf das drehbare Element geschieht auf dieselbe Weise, wie die Übertragung der Linearbewegung der ersten Klemmbacke auf das drehbare Element.

Zur Realisierung der Umsetzung der Linearbewegung der Klemmbacken in die Rotationsbewegung des drehbaren Elements sind die Mitnehmer und die Elemente jeweils als Zapfen und als Langloch ausgebildet, wie dies eine vorteilhafte Ausführungsform der Erfindung vorsieht. Zweckmäßigerweise sind die Langlöcher in dem drehbaren Element angeordnet, welches als kreisrunde Scheibe ausgebildet sein kann. Die Zapfen müssen sich dann an entsprechenden korrespondierenden Stellen der Klemmbacken befinden. Die Langlöcher können sich jedoch auch in den Klemmbacken befinden und die Zapfen an dem drehbaren Element, wenn dies zweckmäßig sein sollte.

Eine weitere vorteilhafte Ausführungsform der Erfindung sieht vor, daß das drehbare Element eine Scheibe ist, welche mittig eine Öffnung aufweist, durch welche sich die Achse erstreckt, um die sich das drehbare Element dreht. Um die Öffnung ist eine zylinderförmige Erhebung ausgebildet, welche einen Mitnehmer aufweist. Der Mitnehmer ist zweckmäßigerweise als am Umfang der zylinderförmigen Erhebung angeordneter Vorsprung ausgebildet. Durch eine derartige Erhebung läßt sich auf besonders einfache Weise eine Verbindung mit dem drehbaren Element herstellen.

Das verzahnte Element kann eine Öffnung aufweisen, welche die zylinderförmige Erhebung des drehbaren Elements formschlüssig umschließt. Hierdurch führt das verzahnte Element entsprechend dem drehbaren Element eine Zwangsbewegung aus. In vorteilhafter Weise ist das verzahnte Element als eine kreisförmige Scheibe ausgebildet, welche an ihrem Umfang Zähne aufweist und in der Mitte eine Öffnung hat, welche die zylinderförmige Erhebung des drehbaren Elements formschlüssig umschließt. Durch die Zähne auf dem Umfang der kreisförmigen Scheibe läßt sich auf einfache Weise ein Eingriff der Rastnase des Auslösers in das verzahnte Element bewirken.

In vorteilhafter Weise kann die Achse, um die sich das drehbare Element dreht, in Richtung der ersten Klemmbacke außerhalb der Mitte der Grundplatte des Grundkörpers der Halterung angeordnet sein. Die sich senkrecht zur Grundplatte erstreckende Wand der ersten Klemmbacke weist dann zweckmäßigerweise eine Ausnehmung auf, in die sich ein Teil der Grundplatte der zweiten Klemmbacke bei zusammengeschobenen Klemmbacken erstreckt. Hierdurch wird eine sehr schmale Bauform der Halterung erreicht. Zweckmäßigerweise können die sich senkrecht zu den Grundplatten der Klemmbacken erstreckenden Wände hohl ausgebildet sein. Die Ausnehmung in der sich senkrecht zur Grundplatte erstreckenden Wand der ersten Klemmbacke kann dann durch Weglassen eines Teils der inneren Wandung erreicht werden.

Die sich senkrecht zu den Grundplatten erstreckenden Seitenwände der Klemmbacken können an ihren sich gegenüberstehenden Seiten eine besondere geometrische Ausbildung aufweisen, wodurch sich eine besonders günstige Klemmung der von der Halterung aufzunehmenden Gegenstände ergibt. So können die Klemmbacken beispielsweise eine kreisförmig gebogene Innenseite haben, wodurch in besonders vorteilhafter Weise Dosen, wie beispielsweise Getränkedosen, von der Halterung aufgenommen werden können. Hat der von der Halterung aufzunehmende Gegenstand eine besondere geometrische Ausgestaltung, können die Innenseiten der Klemmbacken entsprechend ausgebildet sein. Der Gegenstand sitzt dann besonders fest in der Halterung.

Durch die erfindungsgemäße Ausbildung der Halterung läßt sich die Halterung auf einfache Weise montieren. Die Einzelteile der Halterung lassen sich auf einfache Weise herstellen und sind nicht anfällig gegen Beschädigungen.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt:

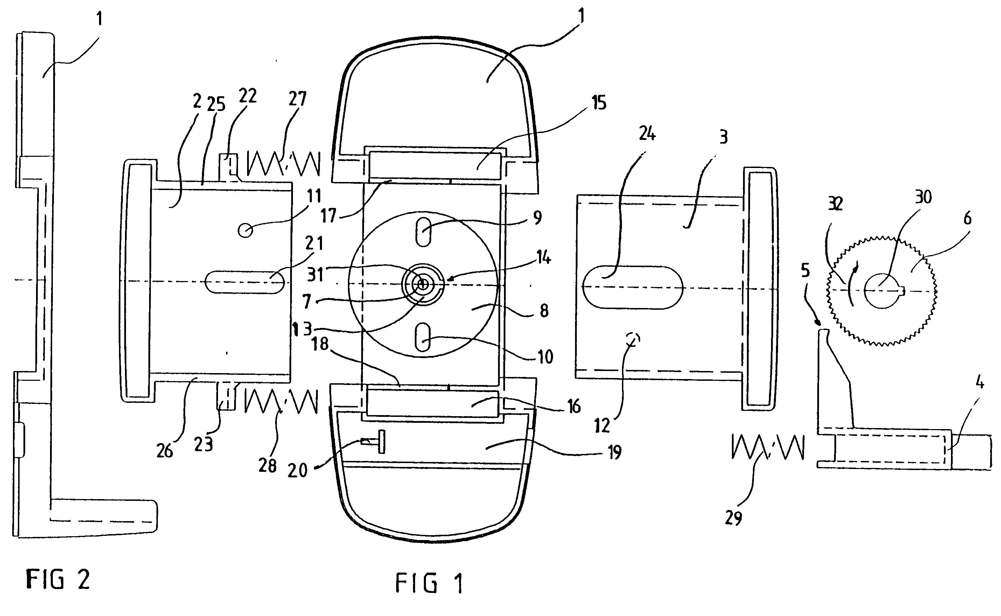

- Fig. 1: eine erfindungsgemäße Halterung als Einzelteilanordnung schematisch in der Draufsicht von hinten ohne Abdeckung,
- Fig. 2: eine Seitenansicht des Grundkörpers, und

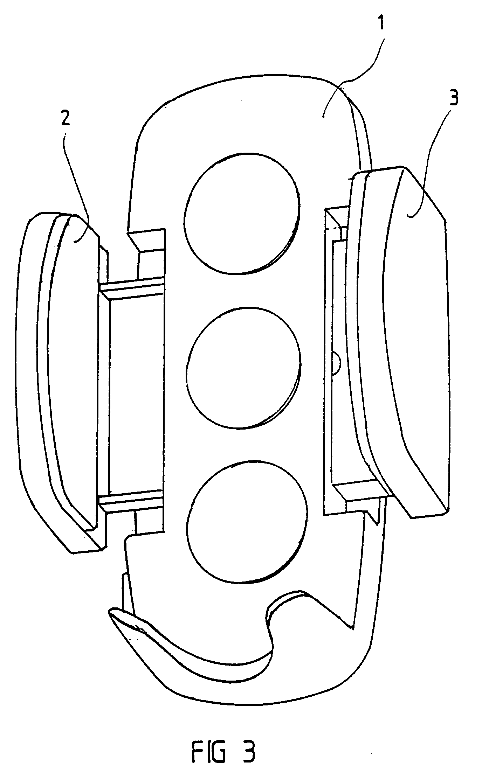

- Fig. 3: eine erfindungsgemäße Halterung in perspektivischer Darstellung.

Ein Grundkörper 1 weist Kammern 15, 16 auf, in die Spiralfedern 27, 28 einbringbar sind. Die Seitenwände der Kammern 15, 16 weisen in einem Bereich 17, 18 eine geringere Höhe auf als im übrigen Bereich.

Der Grundkörper 1 weist darüber hinaus eine Auslöserkammer 19 auf, in welcher ein Steg 20 angeordnet ist. In der Auslöserkammer 19 ist eine Spiralfeder 29 angeordnet.

In Richtung der ersten Klemmbacke 2 außerhalb der Mittellinie versetzt weist die Halterung 1 eine Achse 7 auf. Die Achse 7 erstreckt sich etwa senkrecht zur Ebene der Grundfläche der Halterung 1. Auf der Achse 7 ist drehbar eine Scheibe 8 angeordnet. Die Scheibe 8 hat um ihre die Achse 7 umfassende Öffnung eine zylinderförmige Erhebung 13. Die zylinderförmgie Erhebung 13 weist an ihrem Umfang einen sich in radialer Richtung erstreckenden Vorsprung 14 auf. Die Scheibe 8 weist darüber hinaus zwei Langlöcher 9, 10 auf. Die Langlöcher sind diametral gegenüberstehend angeordnet.

Eine in der Zeichnung separat dargestellte, an ihrem Umfang verzahnte Scheibe 6 weist in der Mitte eine Öffnung 30 auf, welche entsprechend der Form der zylinderförmigen Erhebung 13 der Scheibe 8 ausgebildet ist. Die verzahnte Scheibe 6 sitzt im eingebauten Zustand auf der Scheibe 8 und umschließt mit ihrer Öffnung 30 die zylinderförmige Erhebung 13. Durch den Vorsprung 14 der zylinderförmigen Erhebung 13 und der entsprechenden Ausbildung der Öffnung 30 führt die verzahnte Scheibe 6 mit der drehbaren Scheibe 8 eine Zwangsbewegung aus.

Zwischen der Grundplatte des Grundkörpers 1 und der drehbaren Scheibe 8 ist eine als Schieber ausgebildete Grundplatte einer Klemmbacke 2 angeordnet. Die Klemmbacke 2 weist hierzu ein Langloch 21 auf, durch welches sich die Achse 7 des Grundkörpers 1 erstreckt. Die Grundplatte der Klemmbacke 2 weist zwei seitlich abstehende Vorsprünge 22, 23 auf, welche in Richtung senkrecht zur Ebene der Grundplatte laschenförmig ausgebildet sind. Die Laschen der Vorsprünge 22, 23 greifen in die Kammern 15, 16 des Grundkörpers 1. Der Eingriff in die Kammern 15, 16 wird durch die verringerte Höhe der Seitenwand in den Bereichen 17, 18 erleichtert. Die sich in den Kammern 15, 16 befindlichen Spiralfedern 27, 28 befinden sich zwischen der der Klemmbacke 2 entfernteren Stirnwand der Kammern 15, 16 und den Laschen der Vorsprünge 22, 23. Hierdurch kann die Klemmbacke 2 nur gegen die Kraft der Federn 27, 28 auf den Grundkörper 1 zubewegt werden.

Die Grundplatte der Klemmbacke 2 weist einen Zapfen 11 auf, welcher mit dem Langloch 9 der drehbaren Scheibe 8 korrespondiert. Der Zapfen 11 erstreckt sich somit im eingebauten Zustand der Klemmbacke 2 durch das Langloch 9.

An der der Grundplatte der Klemmbacke 2 abgewandten Seite der drehbaren Scheibe 8 ist die Grundplatte einer zweiten Klemmbacke 3 angeordnet. Die Grundplatte der Klemmbacke 3 weist ein Langloch 24 auf, durch welches sich im eingebauten Zustand die zylinderförmige Erhebung 13 der drehbaren Scheibe 8 erstreckt. Die Grundplatte der zweiten Klemmbacke 3 weist einen zylinderförmigen Zapfen 12 auf, welcher sich im eingebauten Zustand der Klemmbacke 3 durch das Langloch 10 der drehbaren Scheibe 8 erstreckt. Hierdurch wird eine Zwangsbewegung der Klemmbacke 3 mit der drehbaren Scheibe 8 erreicht.

Die Grundplatten der Klemmbacken 2, 3 sind so ausgebildet, daß sie ineinanderschiebbar sind. Das heißt, die Breite der Grundplatte der Klemmbacke 3 ist so gewählt, daß sie geringfügig kleiner ist als der Abstand von sich senkrecht zur Grundplatte der Klemmbacke 2 erhebenden Stegen 25, 26.

Die Seitenwände der Klemmbacken 2, 3, zwischen welche die von der Halterung aufzunehmenden Gegenstände geklemmt werden, sind hohl ausgebildet. Die Seitenwand der Klemmbacke 2 ist so ausgebildet, daß sich die Seite der Seitenwand der Klemmbacke 2, welche der Klemmbacke 3 zugewandt ist, nur bis zur Grundplatte der Klemmbacke 2 erstreckt. Hierdurch kann die Grundplatte der Klemmbacke 3 bis zu dem Teil der Seitenwand der Klemmbacke 2 geschoben werden, welcher der Klemmbacke 3 abgewandt ist. Hierdurch wird eine geringe Bauform der Halterung erreicht.

An der der drehbaren Scheibe 8 abgewandten Seite der Grundplatte der Klemmbacke 3 ist im eingebauten Zustand die verzahnte Scheibe 6 angeordnet. In die sich am Umfang der verzahnten Scheibe 6 befindlichen Zähne greift eine Rastnase 5 eines Auslösers 4 ein. Der Auslöser 4 hat einen quaderförmigen Grundkörper, welcher an seiner zum Grundkörper 1 der Halterung weisenden Seite offen ist. Der Grundkörper des Auslösers 4 ist so bemessen, daß er in dem Auslöserkanal 19 verschiebbar angeordnet werden kann. Innerhalb des Grundkörpers des Auslösers 4 ist die Spiralfeder 29 angeordnet, welche einerseits durch die dem Grundkörper 1 der Halterung abgewandten Stirnseite des Auslösers und andererseits durch den im Kanal 19 angeordneten Steg 20 begrenzt wird. Hierdurch kann der Auslöser 4 nur gegen die Kraft der Feder in Richtung Grundkörper 1 der Halterung verschoben werden.

Der Auslöser 4 beziehungsweise die Rastnase 5 sind so angeordnet, daß die Rastnase 5 im unbetätigten Zustand des Auslösers 4 im der Klemmbacke 2 zugewandten Bereich in die Verzahnung der verzahnten Scheibe 6 eingreift. Da bei einer Drehbewegung in Richtung des Pfeils 32 die Verzahnung der verzahnten Scheibe 6 eine Bewegung des Auslösers 4 in Richtung Grundkörper 1 der Halterung bewirkt, gerät die Rastnase 5 kurzzeitig außerhalb des Eingriffs in die Verzahnung der verzahnten Scheibe 6, wodurch eine Drehbewegung in Richtung des Pfeils 32 möglich ist. Durch eine Bewegung entgegen der Richtung des Pfeils 32 würde die Rastnase 5 tiefer in die Verzahnung gezogen werden, wodurch eine Drehbewegung in diese Richtung unterbunden wird. Eine Drehbewegung in diese Richtung ist nur möglich, wenn der Auslöser 4 soweit in den Grundkörper 1 der Halterung geschoben wird, daß sich die Rastnase 5 außerhalb der Verzahnung der verzahnten Scheibe 6 befindet.

Die Achse 7 weist im Zentrum eine Öffnung 31 auf, in die eine Schraube eindrehbar ist, mittels der die Grundplatte der Klemmbacke 2, die drehbare Scheibe 8, die Grundplatte der Klemmbacke 3 und die verzahnte Scheibe 6 mit dem Grundkörper 1 der Halterung verbunden werden können. Der Grundkörper 1 weist des weiteren nicht gezeigte Befestigungselemente auf, mittels denen eine Abdeckung mit dem Grundkörper 1 verbunden werden kann.

## Patentansprüche

1. Halterung zum Einbau in Fahrzeuge, insbesondere Kraftfahrzeuge, zur vorübergehenden Aufnahme von frei beweglichen Teilen, insbesondere Mobilfunktelefonen, mit einem Grundkörper (1), an dem zwei Klemmbacken (2, 3) befestigt sind, von denen wenigstens eine erste (2) gegen eine Federkraft verschiebbar und in unterschiedlichen Positionen arretierbar ist, und einem Auslöser (4), mit dem die Arretierung aufhebbar ist, wobei der Auslöser (4) eine Rastnase (5) aufweist, welche in ein verzahntes Element (6) eingreift, und der Eingriff durch Verschiebung des Auslösers (4) aufhebbar ist,
dadurch gekennzeichnet,
daß ein um eine Achse (7) drehbares Element (8) vorgesehen ist, welches in einem Abstand zur Achse (7) wenigstens einen ersten Mitnehmer (9) aufweist, und die erste verschiebbare Klemmbacke (2) wenigstens ein mit dem ersten Mitnehmer (9) in Eingriff bringbares erstes Element (11) aufweist, wobei das drehbare Element (8) mit dem verzahnten Element (6) in Wirkverbindung steht.

2. Halterung nach Anspruch 1,
dadurch gekennzeichnet,
daß auch die zweite Klemmbacke (3) gegen eine Federkraft verschiebbar und in unterschiedlichen Positionen arretierbar ist.

3. Halterung nach Anspruch 2,
dadurch gekennzeichnet,
daß das drehbare Element (8) einen zweiten Mitnehmer (10) aufweist und die zweite Klemmbacke (3) ein mit dem zweiten Mitnehmer (10) in Eingriff bringbares zweites Element (12) aufweist.

4. Halterung nach einem
der Ansprüche 1 bis 3,
dadurch gekennzeichnet,
daß die Mitnehmer (9, 10) und die Elemente (11, 12) jeweils als Zapfen und Langloch ausgebildet sind.

5. Halterung nach einem
der Ansprüche 1 bis 4,
dadurch gekennzeichnet,
daß das drehbare Element (8) eine Scheibe ist, welche mittig eine Öffnung aufweist, durch welche sich die Achse (7) erstreckt, und um welche Öffnung eine zylinderförmige Erhebung (13) ausgebildet ist, welche Erhebung einen am Umfang angeordneten, als Mitnehmer ausgebildeten Vorsprung (14) aufweist.

6. Halterung nach einem
der Ansprüche 1 bis 5,
dadurch gekennzeichnet,
daß das verzahnte Element (6) eine kreisförmige Scheibe ist, welche an ihrem Umfang Zähne aufweist und welche mittig eine Öffnung (30) aufweist, welche Öffnung (30) die zylinderförmige Erhebung (13) formschlüssig umschließt.

7. Halterung nach einem
der Ansprüche 1 bis 6,
dadurch gekennzeichnet,
daß die Achse (7) in Richtung der Klemmbacke (2) zur Mitte des Grundkörpers (1) versetzt angeordnet ist und die Klemmbacke (2) in ihrem sich senkrecht zur Grundplatte erstreckenden Schenkel eine Ausnehmung aufweist, in die sich die Grundplatte der Klemmbacke (3) dann hinein erstreckt, wenn die Klemmbacken (2, 3) ihren geringsten Abstand zueinander aufweisen.

## Claims

1. A holding device for fitting into vehicles, in particular motor vehicles, for temporarily accommodating freely movable articles, in particular mobile telephones, comprising a main body (1) to which two clamping jaws (2, 3) are fixed. of which at least a first one (2) is displaceable against a spring force and is arrestable in different positions, and a release means (4) with which the arresting effect is releasable, wherein the release means (4) has a retaining projection (5) which engages into a toothed element (6) and the engagement is releasable by displacement of the release means (4), characterised in that there is provided an element (8) which is rotatable about a spindle (7) and which at a spacing relative to the spindle (7) has at least one first entrainment portion (9) and the first displaceable clamping jaw (2) has at least one first element (11) which can be brought into engagement with the first entrainment portion (9), wherein the rotatable element (8) is operatively connected to the toothed element (6).

2. A holding device according to claim 1 characterised in that the second clamping jaw (3) is also displaceable against a spring force and is arrestable in different positions.

3. A holding device according to claim 2 characterised in that the rotatable element (8) has a second entrainment portion (10) and the second clamping jaw (3) has a second element (11) which can be brought into engagement with the second entrainment portion (10).

4. A holding device according to one of claims 1 to 3 characterised in that the entrainment portions (9, 10) and the elements (11, 12) are respectively in the form of a pin and a slot.

5. A holding device according to one of claims 1 to 4 characterised in that the rotatable element (8) is a disc which centrally has an opening through which the spindle (7) extends and around which opening there is a cylindrical raised portion (13), said raised portion having a protrusion (14) which is arranged at the periphery and which is in the form of an entrainment portion.

6. A holding device according to one of claims 1 to 5 characterised in that the toothed element (6) is a circular disc which has teeth at its periphery and which centrally has an opening (30), which opening embraces the cylindrical raised portion (13) in positively locking relationship.

7. A holding device according to one of claims 1 to 6 characterised in that the spindle (7) is arranged in displaced relationship with respect to the centre of the main body (1) in the direction of the clamping jaw (2) and in its limb extending perpendicularly to the base plate the clamping jaw (2) has an opening into which the base plate of the clamping jaw (3) extends when the clamping jaws (2, 3) are at their smallest spacing relative to each other.

## Revendications

1. Support à monter dans des véhicules, notamment des véhicules automobiles, pour recevoir temporairement des éléments pouvant être librement déplacés, notamment des radiotéléphones mobiles, comprenant un corps de base (1) sur lequel sont fixés deux mors de serrage (2, 3), dont au moins un premier mors de serrage (2) peut coulisser contre une force de ressort et être bloqué dans différentes positions, et comprenant un déclencheur (4) permettant de supprimer le blocage, le déclencheur (4) présentant un ergot de crantage (5) qui s'engage dans un élément denté (6), et l'engagement pouvant être supprimé en déplaçant le déclencheur (4),
**caractérisé** en ce qu'il est prévu un élément (8), qui est rotatif autour d'un axe (7) et présente, à distance de l'axe (7), au moins un premier entraîneur (9), et le premier mors de serrage coulissant (2) présente au moins un premier élément (11) pouvant être amené en engagement avec le premier entraîneur (9), l'élément rotatif (8) étant en liaison fonctionnelle avec l'élément denté (6).

2. Support selon la revendication 1, **caractérisé** en ce que le deuxième mors de serrage (3) peut également coulisser contre une force de ressort et être bloqué dans différentes positions.

3. Support selon la revendication 2, **caractérisé** en ce que l'élément rotatif (8) présente un deuxième entraîneur (10), et le deuxième mors de serrage (3) présente un deuxième élément (12) pouvant être amené en engagement avec le deuxième entraîneur (10).

4. Support selon une des revendications 1 à 3, **caractérisé** en ce que les entraîneurs (9, 10) et les éléments (11, 12) sont respectivement réalisés sous forme de tenons et de trous oblongs.

5. Support selon une des revendications 1 à 4, **caractérisé** en ce que l'élément rotatif (8) est un disque qui présente au centre une ouverture, à travers laquelle s'étend l'axe (7) et autour de laquelle est formé un bossage cylindrique (13), qui présente une saillie (14) disposée sur la périphérie et conçue comme entraîneur.

6. Support selon une des revendications 1 à 5, **caractérisé** en ce que l'élément denté (6) est un disque circulaire, qui présente des dents sur sa périphérie et qui présente au centre une ouverture (30) qui entoure en engagement positif le bossage cylindrique (13).

7. Support selon une des revendications 1 à 6, **caractérisé** en ce que l'axe (7) est disposé en étant décalé en direction du mors de serrage (2) par rapport au milieu du corps de base (1), et le mors de serrage (2) présente, dans sa branche s'étendant perpendiculairement à la plaque de base, un évidement à l'intérieur duquel la plaque de base du mors de serrage (3) s'étend lorsque les mors de serrage (2, 3) se trouvent à leur écartement minimal.
